# EUROPEAN PATENT SPECIFICATION

(11) **EP 4 299 232 B1**
(45) Date of publication and mention of the grant of the patent: **12.11.2025**
(21) Application number: 23172370.1
(22) Date of filing: 09.05.2023
(51) Int. Cl.: B23K 26/03, B23K 26/082, B23K 26/08, B23K 26/36, F01D 5/00, F01D 5/28, B23K 101/00

(54) **SYSTEM AND METHOD FOR FORMING SLOTS IN A COATING PRESENT ON A COMPONENT**
SYSTEM UND VERFAHREN ZUR HERSTELLUNG VON SCHLITZEN IN EINER BESCHICHTUNG AUF EINEM BAUTEIL
SYSTÈME ET PROCÉDÉ DE FORMATION DE FENTES DANS UN REVÊTEMENT PRÉSENT SUR UN COMPOSANT

(30) Priority: 28.06.2022 US 202217851295
(43) Date of publication of application: 03.01.2024
(73) Proprietor: General Electric Company, Evendale, OH 45215 (US)
(72) Inventor: CHEN, Hongqiang, Schenectady, 12345 (US); KESHAVAN, Hrishikesh, Schenectady, 12345 (US); JOHNSON, Curtis, Schenectady, 12345 (US); MOON, Jaewon, Schenectady, 12345 (US)
(74) Representative: Openshaw & Co.

(56) References cited:
- CN-A- 107 999 967
- DE-A1- 102017 111 211
- DE-A1- 102018 106 362
- DE-A1- 102021 006 286
- US-A1- 2021 199 053

## Description

The present invention relates to a system and method for forming slots in a thermal barrier coating present on a component, such as a gas turbine engine component, according to the preamble of claims 1 and 11 (see for example US 2021/199053 A1).

### BACKGROUND

Turbomachines, such as gas turbine engines, include various components that are exposed to high temperatures and pressures during operation. For example, the combustor liners, turbine stator vanes, and the turbine blades are directly exposed to the hot combustion gases generated by the gas turbine engine. In this respect, many of components of a gas turbine engine operating in high temperature and/or pressure environments have a thermal barrier coating (TBC) applied to their exterior surface.

The TBC is generally formed from a material that can withstand higher temperatures than the substrate or base material of the component on which the TBC is applied. As such, the TBC protects the component from oxidation, corrosion, and/or other damage associated with exposure to high temperatures and/or pressures.

CN 107999967 A relates to a system for laser etching. DE 10 2017 111 211 A1 relates to a system for localized removal of a metallization layer from a plastic workpiece; the plastic may be transparent. DE 10 2021 006 286 A1 relates to the removal of fire cracks from a mould used for die casting; the fire cracks are cracks and microcracks that appear on the surface of the die casting mould due to thermal shock resulting from a water-release agent.

### BRIEF DESCRIPTION OF THE DRAWINGS

According to a first aspect of the present invention, a system for forming slots in a thermal barrier coating present on a component is defined in claim 1. According to a second aspect of the present invention, a method for forming slots in a thermal barrier coating present on a component is defined in claim 11.

Further embodiments according to the first and second aspects of the present invention are defined in the dependent claims.

A full and enabling disclosure of the present invention, including the best mode thereof, directed to one of ordinary skill in the art, is set forth in the specification, which makes reference to the appended figures, in which:
FIG. 1 is a diagrammatic view of an electromagnetic radiation beam emitting device in accordance with an exemplary aspect of the present disclosure.
FIG. 2 is a schematic view of a system for forming slots in a coating present on a component in accordance with an exemplary aspect of the present disclosure.
FIG. 3 is a flow chart diagram of control logic for forming slots in a coating present on a component in accordance with an exemplary aspect of the present disclosure.
FIG. 4 is a side view of a component in which a slot pattern is being formed in a coating applied to the component in accordance with an exemplary aspect of the present disclosure.
FIG. 5 is a top view of the component shown in FIG. 4 after the slot pattern has been formed in the coating.
FIG. 6 is a flow chart diagram of a method for forming slots in a coating present on a component in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

Laser slotting has been used to fabricate slots on thermal barrier coatings (TBCs), which are used in high pressure turbine components to protect the structural metal against oxidation, corrosion, and other environmental damage. Slotting TBC improves the coating durability (2X life or more) and results in longer component life and subsequently improves time-on-wing. The disclosed system and method adaptively laser slot TBC on 3D curved part of a known profile shape (width, depth, etc.) for new make and repair parts.

During laser TBC slotting process, short pulse high frequency laser that ablates the material gradually to remove (or slot) the coating from specific locations of the component. To achieve required material removal rate and to maintain small feature size, it is imperative to keep laser beam focused on the TBC planar surface. When the laser is in focus it results in uniform repeatable slot geometries of known width and depth. However, gas turbine components such as airfoils, deflectors all have 3D surfaces. In the past, systems and methods to slots planar or 2D surfaces by part positioning to correct focus X, Y & Z height with 1-3 axis motion control. In a situation where out of plane slotting needs to be completed, the part must be physically moved to the plane of focus, which has a tolerance of 10 mils before laser slotting.

However, for complex 3D shapes such as airfoils or deflector that have curved surfaces a different approach is needed. The disclosed system and method allow for slotting on a complex 3D surface that is scalable and manufacturing friendly.

Previously, to achieve a complex 3D slots on a component, such as on a lead edge of an airfoil, the component was moved relative to the machine. Depending on the size of the component and the fine features of the predetermined slot pattern, moving the part can be expensive or impractical. A multi-axis CNC motion system is needed to move 3~5 axis together to trace 3D curve surface profile. More so due to inertia of motion system, it cannot meet the need for high-speed slotting which can be as high as 1000mm/s (40 inches/sec). Depending on the fine slot features needed, the accuracy of motion needed would make it impossible or impractical to move with high dynamic motion. Additionally, since this is a laser ablation process, the part must move multiple times in order to progressively remove coating material to achieve the predetermined slot depth. This will not allow the laser beam stay focus on 3D curved part with traditional multi-axis laser machining system. These factors make moving the part not practical.

In this respect, the present invention defines a system and a method for forming slots in a coating present on a component, see claims 1 and 11. The system includes an electromagnetic radiation beam emitting device configured to emit an electromagnetic radiation beam (e.g., a laser beam) at a surface of the component to form one or more slots in a thermal barrier coating (TBC) present on the surface. In this respect, the electromagnetic radiation beam emitting device includes a base positioned on a support surface, an arm coupled to the base, and a scan head coupled to the arm. The scan head is, in turn, configured to emit the electromagnetic radiation beam at the surface of the component. Furthermore, the arm is moveable about at least three axes to move the scan head relative to the surface of the component. As such, the scan head may have five or more degrees of freedom.

A computing system is configured to control the operation of the electromagnetic radiation beam emitting device to form a slot pattern in the coating of the component. The computing system is configured to control the operation of the electromagnetic radiation beam emitting device such that a portion of the surface is scanned with the electromagnetic radiation beam. Furthermore, the computing system is configured to determine a three-dimensional profile of the scanned portion of the surface and generate a slot pattern based on the determined profile. Thereafter, the computing system is configured to control the operation of the arm to move the position of the electromagnetic radiation beam relative to the surface of the component such that material is ablated from the coating to form the slot pattern in the coating. For example, the computing system may be configured to control the operation of a plurality of arm actuators to move the arm about three or more axes to move the position of the electromagnetic radiation beam relative to the surface of the component when forming the slot pattern in the coating. Thus, the component remains stationary relative to the base and the support surface when the slot pattern is being formed.

Moving the position of an electromagnetic radiation beam relative to a surface of a component about three or more axes when forming a slot pattern in a coating applied to the component improves the efficiency and repeatability of the slot forming operation. More specifically, many gas turbine engine components on which a TBC is applied have curved surfaces (e.g., the leading edge of a turbine blade). In this respect, when forming a slot in the coating, the component is moved several times to position the surface of the component relative to the electromagnetic radiation beam such that the slot has the predetermined width and depth. Such repositioning of the component during slot formation is time-consuming and prone to error, thereby resulting in low repeatability of the slot forming operation. However, with the disclosed system and method, the electromagnetic radiation beam is moved about at least three axes (e.g., about five degrees of freedom) to allow for the formation of a slot having the predetermined width and depth in the coating of a curved component without the need to reposition the component once slot formation begins. Thus, the disclosed system and method improves the efficiency and repeatability of a slot forming operation for a curved component. Additionally, the time on wing increases substantially since the laser optics is slotting these components at twenty to forty inches/second. It can work for both new make and repair part which could have distorted 3D shape compared with design model.

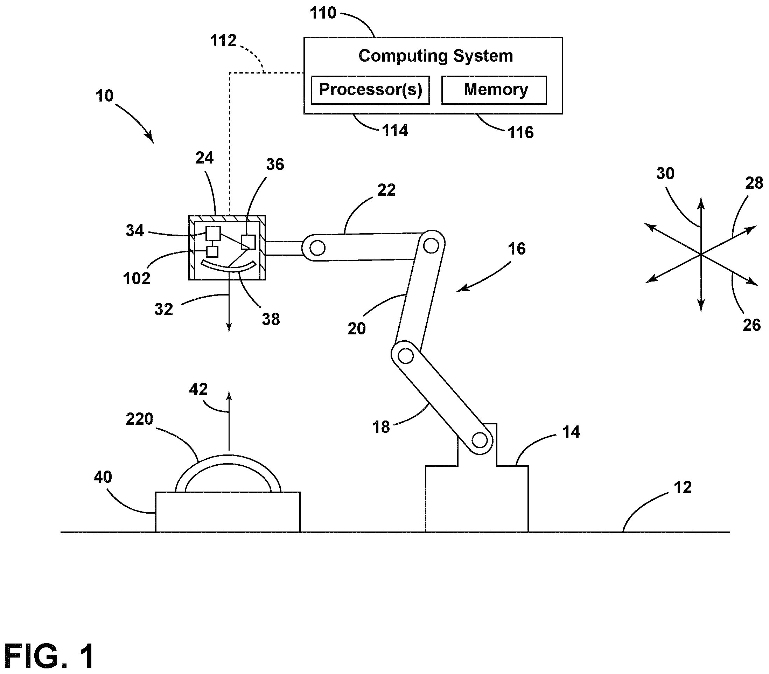

Referring now to the drawings, wherein identical numerals indicate the same elements throughout the figures, FIG. 1 is a diagrammatic view of one embodiment of an electromagnetic radiation beam emitting device 10 positioned on a support surface 12 (e.g., a shop floor). In general, the electromagnetic radiation beam emitting device 10 is configured to emit an electromagnetic radiation beam to form a slot(s) in a TBC on a component. As indicated above, the slot(s) formed within the coating improve the durability of the coating, which, in turn, can extend the operational life of the component.

In several embodiments, the electromagnetic radiation beam emitting device 10 includes a base 14, an arm 16 coupled to the base 14, and a scan head 24 coupled to the arm 16. Specifically, in such embodiments, the base 14 is supported by the support surface 12. The base 14, in turn, supports one or more other components of the electromagnetic radiation beam emitting device 10, such as the arm 16 and the scan head 24. Alternatively, the arm 16 could be coupled to the support surface itself.

Furthermore, the arm 16 is configured to move scan head 24 relative to the base 14 and the support surface 12. In general, the scan head 24 is moveable about at least three axes relative to the base 14 and the support surface 12. For example, in the illustrated embodiment, the arm 16 include a first arm segment 18 moveably coupled to the base 14, a second arm segment 20 moveably coupled to the first arm segment 18, and a third arm segment 22 moveably coupled to the second arm segment 20. In this respect, the arm segments 18, 20, 22 may be moveable relative to each other. As such, in the illustrated embodiment, the arm 16 is moveable about a first axis 26 (e.g., an X-axis), a second axis 28 (e.g., a Y-axis) that is perpendicular to the first axis 26, and a third axis 30 (e.g., a Z-axis) that is perpendicular to the first and second axes 26, 28. Thus, the arm 16 may be moveable such that the scan head 24 has five degrees of freedom relative to the base 14 and the support surface 12 (e.g., translation about the first, second, and third axes 26, 28, 30 and rotation about at least two of the first, second, and third axes 26, 28, 30). However, in alternative embodiments, the arm 16 may have any other suitable number of arm segments and/or the arm 16 may be configured to move the scan head 24 about any other suitable number of axes/degree of freedom (e.g., about five axes).

It will also be understood that the arm 16 can be a robotic arm with numerous segments or degrees of freedom. Further still, while in the exemplary illustration the arm segments have a set and equal length this need not be the case. Further still, while the exemplary illustration shows the arm segments 18, 20, 22 seemingly hingedly or pivotally coupled to each other and to the base 14 this also need not be the case. Further still, it is contemplated that the arm 16 may be rotatably mounted on the base 14 and that controlling the placement of the arm 16 about a rotational axis may also provide additional degrees of freedom.

The scan head 24 is generally configured to emit an electromagnetic radiation beam (e.g., as indicated by arrow 32) at a component 220 in which a slot pattern is to be formed within a coating. As shown, the component 220 may be positioned on or in a fixture 40, which supports the component 220 relative to the support surface 12. More specifically, the scan head 24 may include an emitter 102 configured to generate or otherwise emit the electromagnetic radiation beam (e.g., the electromagnetic radiation beam 32 shown in FIG. 1). Furthermore, the scan head 24 may include first and second mirrors 34, 36, which direct the electromagnetic radiation beam 32 to a lens 38. The lens 38, in turn, directs and focuses the electromagnetic radiation beam 32 emitted by the emitter 102 onto a surface of the component 220 for use in forming a slot pattern in a coating present thereon. The scan head 24 may be configured to emit a beam of any suitable type of electromagnetic energy, such as laser beam. In certain instances, the electromagnetic radiation beam 32 may be used to scan the surface of the component 220. In such instances, the electromagnetic radiation beam 32 may be reflected off of the surface a reflection (e.g., as indicated by arrow 42).

Moreover, as will be described below, the electromagnetic radiation beam emitting device 10 may include a computing system 110. In general, the computing system 110 is configured to control the operation of the scan head 24 and/or the arm 16 of the electromagnetic radiation beam emitting device 10 (e.g., via a communicative link 112).

In operation, and as indicated above, the electromagnetic radiation beam 32 is used to form a slot pattern in the coating of the component 220. More specifically, the positioning of the arm 16 may be moved about the first, second, and third axes 26, 28, 30 to move the scan head 24 about one or more of the five degrees of freedom to position the scan head 24 relative to the surface of the component 220 such that the emitted electromagnetic radiation beam 32 forms the predetermined slot pattern in the coating of the component. In this respect, the electromagnetic radiation beam 32 ablates or otherwise removes material from the coating on the component 220 to form the slot pattern in the coating. In general, the electromagnetic radiation beam 32 makes a series of passes across the surface of the component 220 to form the slot pattern, with each pass ablating a portion of the material that needs to be removed to form the slot pattern.

It will be understood that the surface of the component 220 may be three-dimensional or non-planar in the area where the slot pattern is to be formed. In such an instance, the arm 16 and/or scan head 24 can be adjusted along the surface of the component as the slot pattern is formed to allow the electromagnetic radiation beam 32 to stay focused while moving along the three-dimensional or non-planar portions.

The configuration of the electromagnetic radiation beam emitting device 10 described above and shown in FIG. 1 is provided only to place the present subject matter in an exemplary field of use. Thus, the present subject matter may be readily adaptable to any manner of electromagnetic radiation beam emitting device configuration.

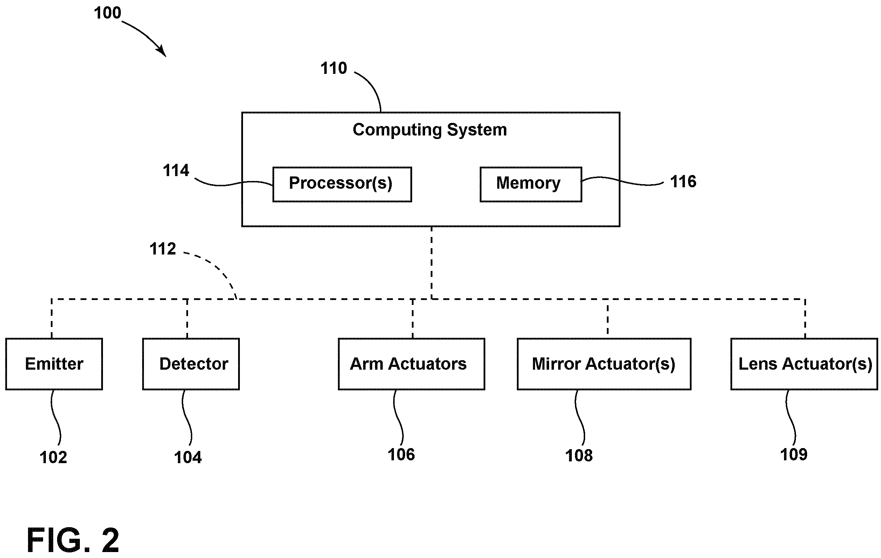

Referring now to FIG. 2, a schematic view of one embodiment of a system 100 for forming slots in a coating present on a component is illustrated in accordance with an exemplary aspect of the present disclosure. In general, the system 100 will be described herein with reference to the electromagnetic radiation beam emitting device 10 described above with reference to FIG. 1. However, the disclosed system 100 may generally be utilized with electromagnetic radiation beam emitting device having any other suitable device configuration.

As shown in FIG. 2, the system 100 includes the emitter 102 and a detector 104 of the scan head 24. Specifically, as mentioned above the emitter 102 is configured to generate or otherwise emit the electromagnetic radiation beam 32, such as at the first mirror 34. As such, the emitter 102 may correspond to any suitable device for generating a beam of electromagnetic radiation, such as laser-emitting diode. Furthermore, the detector 104 is configured to detect the reflections of the emitted electromagnetic radiation beam off of the component (e.g., the component 220 shown in FIG. 1), such as when scanning a surface of the component. Thereafter, the detector 104 generates data indicative of the three-dimensional profile of the scanned surface of the component based on the detected reflections. In this respect, the detector 104 may correspond to any suitable device for detecting a reflected beam of electromagnetic radiation, such as photodiode.

Additionally, in one embodiment, the system 100 includes one or more mirror actuators 108 of the scan head 24. In general, the mirror actuator(s) 108 are configured to rotate or otherwise move the orientation of the first and/or second mirror(s) 34, 36. As such, the mirror actuator(s) 108 may correspond to any suitable device(s) configured to move the orientation of the first and second mirror(s) 34, 36, such as an electric motor(s). It is contemplated that each mirror or the first and second mirror(s) 34, 36 may have a separate mirror actuator 108. Alternatively, a single mirror actuator 108 can be utilized to control both the first mirror 34 and the second mirror 36 or further that more mirror actuators 108 can be utilized.

Furthermore, in one embodiment, the system 100 includes one or more lens actuators 109. In general, the lens actuator(s) 109 is configured to the lens 38 toward and away from the component. As such, the lens actuator(s) 109 may correspond to any suitable device(s) configured to move the lens 38, such as an electric motor(s).

Moreover, the system 100 includes a plurality of arm actuators 106. More specifically, the arm actuators 106 are configured to move the arm 16 relative to the base 14 to move positioning of the scan head 24 relative to the component. For example, the arm actuators 106 may move the arm 16 about the first, second, and third axes 26, 28, 30 to position the scan head 24 relative to the surface of the component such that the emitted electromagnetic radiation beam forms the predetermined slot pattern in the coating of the component. In this respect, the arm actuators 106 may correspond to any suitable devices configured to move the orientation of the arm 16 or any of the arm segments 18, 20, 22, such as electric motors. It is contemplated that each of the arm segments 18, 20, 22 may have a separate arm actuator 106. Alternatively, a single arm actuator 106 can be utilized to control all or multiple of the arm segments 18, 20, 22 or further that any number of arm actuators can be utilized.

In addition, the system 100 includes a computing system 110 communicatively coupled to one or more components of the electromagnetic radiation beam emitting device 10 to allow the operation of the electromagnetic radiation beam emitting device 10 to be electronically or automatically controlled by the computing system 110. For instance, the computing system 110 may be communicatively coupled to the emitter 102 via a communicative link 112. As such, the computing system 110 may be configured to control the operation of the emitter 102 such that the emitter 102 emits the electromagnetic radiation beam. Furthermore, the computing system 110 may be communicatively coupled to the detector 104 via the communicative link 112. In this respect, the computing system 110 may be configured to receive data from the detector 104 that is indicative of three-dimensional profile of the surface of the component. Additionally, the computing system 110 may be communicatively coupled to the arm, mirror actuators, and/or lens actuators 106, 108, 109 via the communicative link 112. Thus, the computing system 110 may be configured to control the operation of the arm, mirror, and/or lens actuators 106, 108, 109 to respectively move the arm 16; the mirrors 34, 36; and/or the lens 38. Moreover, the computing system 110 may be communicatively coupled to any other suitable components of the electromagnetic radiation beam emitting device 10.

In general, the computing system 110 may comprise one or more processor-based devices, such as a given controller or computing device or any suitable combination of controllers or computing devices. Thus, in several embodiments, the computing system 110 may include one or more processor(s) 114 and associated memory device(s) 116 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 116 of the computing system 110 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 116 may generally be configured to store suitable computer-readable instructions that, when implemented by the processor(s) 114, configure the computing system 110 to perform various computer-implemented functions, such as one or more aspects of the methods and algorithms that will be described herein. In addition, the computing system 110 may also include various other suitable components, such as a communications circuit or module, one or more input/output channels, a data/control bus and/or the like.

The various functions of the computing system 110 may be performed by a single processor-based device or may be distributed across any number of processor-based devices, in which instance such devices may be considered to form part of the computing system 110. For instance, the functions of the computing system 110 may be distributed across multiple controllers or computing devices, such as an electromagnetic radiation beam emitting device controller, a laptop or desktop computer, a tablet, a Smartphone, a cloud-based computing device, and/or the like.

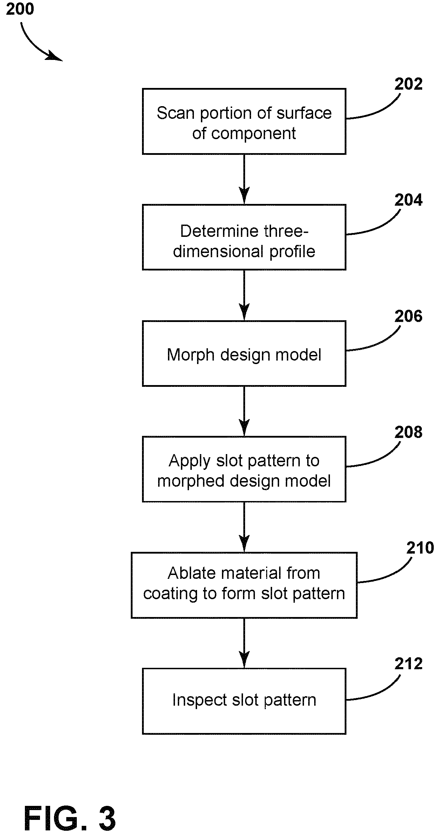

Referring now to FIG. 3, a flow diagram of one embodiment of control logic 200 that may be executed by the computing system 110 (or any other suitable computing system) for forming slots in a coating present on a component in accordance with an exemplary aspect of the present disclosure is shown. Specifically, the control logic 200 shown in FIG. 3 is representative of an algorithm that can be executed to form slots in a coating present on a component in a manner that improves the efficiency and repeatability of the slot forming operation, particularly when forming slots in a non-planar surface such as by way of non-limiting example a curved surface. Thus, in several embodiments, the control logic 200 may be advantageously utilized in association with a system installed on or forming part of an electromagnetic radiation beam emitting device to allow for real-time control of the slot formation operation without requiring substantial computing resources and/or processing time. However, in other embodiments, the control logic 200 may be used in association with any other suitable system, application, and/or the like for forming slots in a coating present on a component.

As shown in FIG. 3, at (202), the control logic 200 includes controlling the operation of an electromagnetic radiation beam emitting device 10 such that a portion of a surface of a component is scanned with an electromagnetic radiation beam. As mentioned above, the computing system 110 is communicatively coupled to the emitter 102 and the arm actuators 106 of the electromagnetic radiation beam emitting device 10 via the communicative link 112. In this respect, the computing system 110 may be configured to control the operation of the emitter 102 and the arm actuators 106 such that an electromagnetic radiation beam (e.g., the electromagnetic radiation beam 32 shown in FIG. 1) is scanned across a portion of the surface of a component (e.g., the component 220 shown in FIG. 1). For example, the computing system 110 may transmit control signals to the emitter 102 instructing the emitter 102 to generate the electromagnetic radiation beam (e.g., a laser beam). Furthermore, the computing system 110 may transmit control signals to arm actuators 106 instructing the arm actuators 106 to move the scan head 24 relative to the component such that the electromagnetic radiation beam is scanned across at least a portion of the surface of the component. At (202), the power of the emitted beam is turned down to allow for scanning. The power is then turned up when ablating material as will be described below. (202) may be optional in some embodiments.

The component being scanned at (202) may correspond to any suitable type of component. For example, in several embodiments, the component may correspond to a gas turbine engine component, such as combustor liner, a turbine stator vane, a turbine blade, or the like. Additionally, the surface of the component or the portion thereof being scanned may have any suitable configuration. Specifically, in some embodiments, the surface may be curved or otherwise non-planar. For example, in one embodiment, the surface being scanned at (202) may correspond to the leading edge of a turbine stator vane or blade. However, in alternative embodiments, the component may be any other type of component, including non-gas turbine engine components.

Moreover, at (204), the control logic 200 includes determining a three-dimensional profile of the scanned portion of the surface. More specifically, as mentioned above, the computing system 110 is communicatively coupled to the detector 104 of the scan head 24 of the electromagnetic radiation beam emitting device 10 via the communicative link 112. In this respect, as the electromagnetic radiation beam is scanned across the portion of the surface of the component at (202), the detector 104 may detect the reflections of the beam off of the surface and generate associated data. Such data is, in turn, indicative of the three-dimensional profile of the scanned surface (e.g., a data point cloud). As such, the computing system may receive the data generated by the detector 104 via the communicative link 112. Thereafter, the computing system 110 may determine the three-dimensional profile of the surface or portion thereof scanned at (202) based on the data received from the emitter 102. As will be described below, the computing system 110 is configured to generate a slot pattern for the coating of the component based on the determined three-dimensional profile of the scanned surface of the component. (204) may be optional in some embodiments.

In addition, at (206), the control logic 200 includes morphing a design model associated with the scanned portion of the surface based on the determined three-dimensional profile. Specifically, in several embodiments, the computing system 110 may access a design model (e.g., a CAD model) that is stored within its memory device(s) 116. Thereafter, the computing system 110 may morph or otherwise modify the accessed design model such that geometry of the design model (or relevant portion thereof) corresponds to the geometry of the three-dimensional profile of the surface determined at (204). Such morphing compensates for deviations between the determined three-dimensional profile of the component surface determined at (204) and the geometry of the design model (e.g., due to manufacturing tolerances or error and/or use of the component). (206) may be optional in some embodiments.

Furthermore, at (208), the control logic 200 includes applying a slot pattern to the morphed design model. More specifically, as described above, the design model of the component that is morphed at (206) has the three-dimensional profile of the component scanned at (202). In this respect, at (208), the computing system 110 may access a slot pattern (e.g., that is stored within its memory device(s) 116) and apply the accessed slot pattern to (e.g., superimpose the slot pattern on) the morphed design model. By applying the slot pattern to the morphed design model, the slot pattern can be accurately and repeatedly formed in the coating of the component.

Additionally, at (210), the control logic 200 includes controlling the operation of an arm of the electromagnetic radiation beam emitting device to move the position of the electromagnetic radiation beam relative to the surface of the component such that material is ablated from the coating to form the slot pattern in the coating. Specifically, in several embodiments, the computing system 110 may control the operation of the arm 16 to move the position of the electromagnetic radiation beam relative to the surface of the component in which the slot pattern is being formed. Such movements of the electromagnetic radiation beam position allow material to be ablated from the coating to form the slot pattern in the coating. For example, in some embodiments, the computing system 110 may initiate movement of the arm 16 about at least three axes (e.g., the first, second, and third axes 26, 28, 30 shown in FIG. 1) to move the position of the electromagnetic radiation beam relative to the surface of the component. In such embodiments, the computing system 110 may transmit control signals to the arm actuators 106 via the communicative link 112. Such control signals, in turn, instruct the arm actuators 106 to move the position the arm 16 (or its arm segments 18, 20, 22) relative to the component to position the scan head 24 in a manner that allows the slot pattern to be formed in the coating. At (210), the component remains stationary relative to the base 14 of the electromagnetic radiation beam emitting device 10 and the support surface 12. Moreover, in some embodiments, the mirror actuator(s) 108 and/or the lens actuator(s) 109 may be controlled to provide further movements (e.g., fine movements) to the position of the electromagnetic radiation beam.

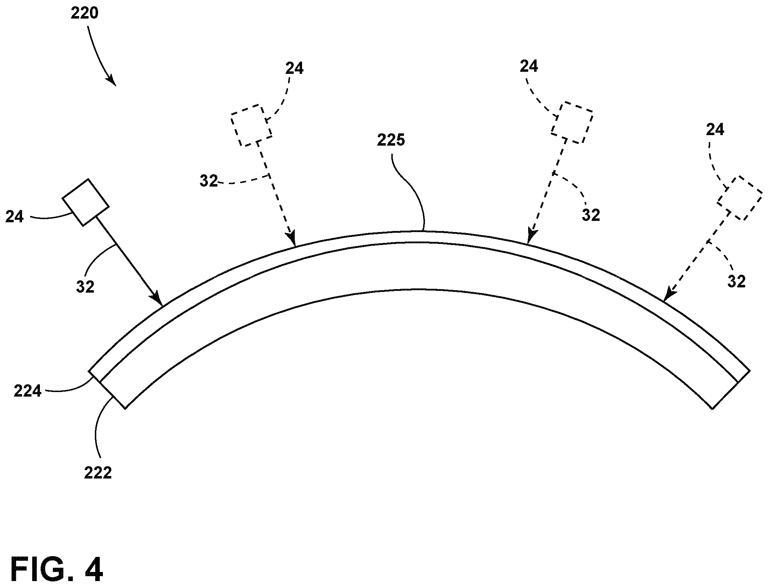

FIG. 4 is a side view of a component 220 in which a slot pattern is being formed in a coating applied to the component. More specifically, as shown, the component 220 includes a base material or substrate 222 and a coating 224 applied on the substrate 222. Thus, the component 220 includes a surface 225 that is the exterior surface of the coating 224. Moreover, the surface 225 of the component 220 is curved. In addition, as indicated above, the component 220 may correspond to any suitable component, such as a gas turbine engine component.

According to the present invention, the coating 224 corresponds to a TBC. The coating 224 may generally include a ceramic thermal barrier material. For example, suitable ceramic thermal barrier coating materials may include various types of oxides, such as aluminum oxide ("alumina"), hafnium oxide ("hafnia"), or zirconium oxide ("zirconia"), in particular stabilized hafnia or stabilized zirconia, and blends including one or both of these. Examples of stabilized zirconia include without limitation yttria-stabilized zirconia, ceria-stabilized zirconia, calcia-stabilized zirconia, scandiastabilized zirconia, magnesia-stabilized zirconia, india-stabilized zirconia, ytterbiastabilized zirconia, lanthana-stabilized zirconia, gadolinia-stabilized zirconia, as well as mixtures of such stabilized zirconia. Similar stabilized hafnia compositions are known in the art and suitable for use in embodiments described herein.

As shown in FIG. 4, at (210), the scan head 24 of the electromagnetic radiation beam emitting device 10 is moved relative to the surface 225 of the component 220. The soil lines indicate the current position of the electromagnetic radiation beam emitting device 10 and the dashed lines indicate subsequent positions of the electromagnetic radiation beam emitting device 10. More specifically, as described above, the computing system 110 is configured to control the operation of the arm 16 (FIG. 1) such that arm 16 is moved about one or more of the at least three axes when ablating material from the coating 224 to form the slot pattern. In this respect, by moving the electromagnetic radiation beam 32 relative to the component 220 and keeping the component 220 fixed relative to the base 14 (FIG. 1) and the support surface 12 (FIG. 1), a slot pattern having the predetermined width and depth can be formed in the curved component, such as the component 220, without the need to reposition the component once the slot forming operation begins. At (210), the power is turned up relative to (202) to allow for ablation of the material as described above.

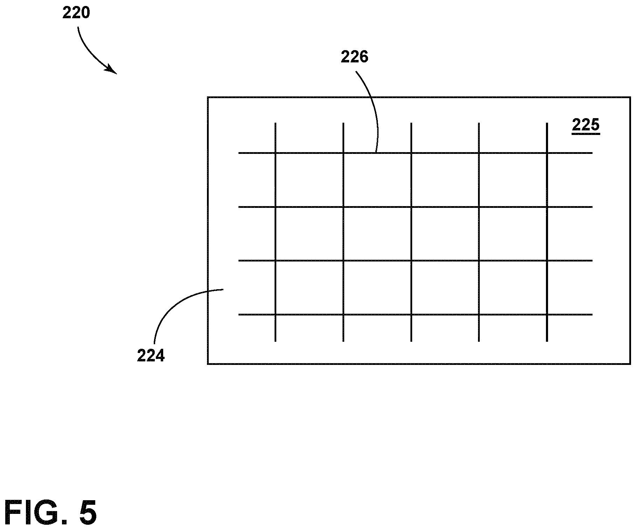

FIG. 5 is a top view of the component 220 after a slot pattern 226 has been formed in the coating 224. In the illustrated embodiment, the slot pattern 226 is formed of a series of perpendicular slots. However, in alternative embodiments, the slot pattern 226 formed at (210) may have any other suitable configuration.

Referring again to FIG. 3, at (212), the control logic 200 includes controlling the operation of the electromagnetic radiation beam emitting device such that the portion of the surface in which the slot pattern is formed is scanned with the electromagnetic radiation beam after slot pattern formation to inspect the slot pattern. Specifically, in several embodiments, the computing system 110 may be configured to control the operation of the emitter 102 and the arm actuators 106 such that the electromagnetic radiation beam is scanned across the portion of the surface of the component in which the slot pattern was formed at (210). The data generated by the detector 104 during scanning may subsequently be used to inspect the quality of the slot pattern, such as to ensure that the slots forming the slot pattern have the predetermined depth and width. At (212), the power is turned down relative to (210) to allow for scanning as described above.

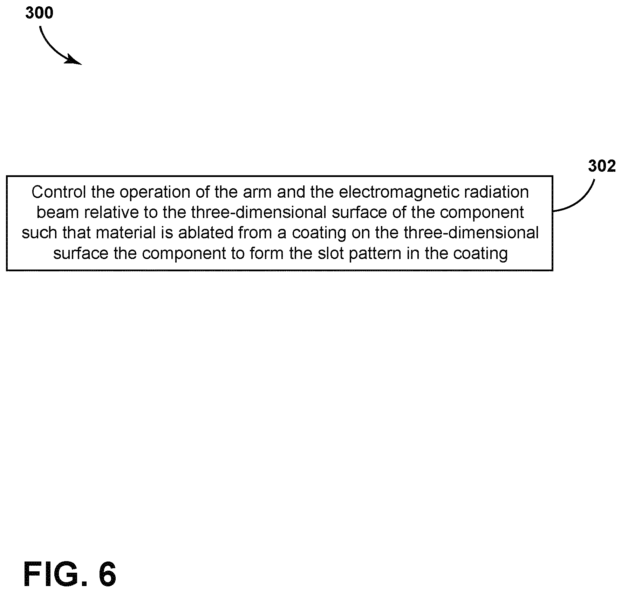

Referring now to FIG. 6, a flow diagram of one embodiment of a method 300 for forming slots in a coating present on a component is illustrated in accordance with an exemplary aspect of the present disclosure. In general, the method 300 will be described herein with reference to the electromagnetic radiation beam emitting device 10 and the system 100 described above with reference to FIGS. 1-5. However, the disclosed method 300 may generally be implemented with any electromagnetic radiation beam emitting device having any suitable device configuration and/or within any system having any suitable system configuration. In addition, although FIG. 6 depicts steps performed in a particular order for purposes of illustration and discussion, the methods discussed herein are not limited to any particular order or arrangement. Rather, the various steps of the methods disclosed herein can be omitted, rearranged, combined, and/or adapted in various ways without deviating from the scope of the present disclosure.

At (302), the method 300 may include controlling, with the computing system, the operation of the arm and the electromagnetic radiation beam relative to the three-dimensional surface of the component such that material is ablated from the coating on the three-dimensional surface to form the slot pattern in the coating. For instance, as described above, the computing system 110 may be configured to control the operation of the arm 16 and the electromagnetic beam emitted by the electromagnetic beam emitting device 10 relative to the surface of the component such that material is ablated from the coating to form the slot pattern in the coating.

This written description uses examples to disclose the present invention including the best mode, and also to enable any person skilled in the art to practice the present invention, which is defined in the appended claims.

## Claims

1. A system (100) for forming slots in a thermal barrier coating (224) present on a component (220), the system (100) comprising:
an electromagnetic radiation beam emitting device (10),
**characterised in that**:
the electromagnetic radiation beam emitting device includes a base (14), an arm (16) coupled to the base (14), and a scan head (32) coupled to the arm (16), the scan head (32) configured to emit an electromagnetic radiation beam at a surface of the component, the arm (16) being adjustable about at least three axes to move the scan head (32) relative to the surface of the component; and
**in that** the system (100) further includes :
a computing system (110) configured to:
control an operation of the electromagnetic radiation beam emitting device (10) such that a portion of the surface is scanned with the electromagnetic radiation beam;
determine a three-dimensional profile of the scanned portion of the surface;
generate a slot pattern based on the determined three-dimensional profile; and
control an operation of the arm (16) to adjust a position of the electromagnetic radiation beam relative to the surface of the component such that material is ablated from the coating to form the slot pattern in the thermal barrier coating (224).

2. The system (100) of claim 1, wherein, when controlling the operation of the arm (16), the computing system (110) is configured to initiate movement of the arm (16) about the at least three axes to adjust the position of the electromagnetic radiation beam relative to the surface of the component such that the material is ablated from the coating to form the slot pattern in the coating.

3. The system (100) of claim 1 or 2, wherein, when generating the slot pattern, the computing system (110) is configured to morph a design model associated with the scanned portion of the surface based on the determined three-dimensional profile.

4. The system (100) of claim 3, wherein, when generating the slot pattern, the computing system (110) is configured to apply the slot pattern to the morphed design model.

5. The system (100) of any preceding claim, wherein the scan head (32) comprises a plurality of mirrors (34, 36) and a lens (38).

6. The system (100) of any preceding claim, wherein the arm (16) comprises a first arm segment (18, 20, 22) and a second arm segment (18, 20, 22) that is moveable relative to the first arm segment (18, 20, 22).

7. The system (100) of any preceding claim, wherein, in use, when generating the slot pattern, the component is stationary relative to the base (14) during operation of the arm (16).

8. The system (100) of any preceding claim, wherein the computing system (110) is further configured to:
control the operation of the electromagnetic radiation beam emitting device (10) such that the portion of the surface is scanned with the electromagnetic radiation beam after the slot pattern is formed in the coating to inspect the slot pattern.

9. The system (100) of any preceding claim in combination with a component (220) having a thermal barrier coating (224), wherein the surface of the component is curved.

10. The system (100) of any preceding claim in combination with a component (220) having a thermal barrier coating (224), wherein the component is a gas turbine engine component.

11. A method (300) for forming slots in a thermal barrier coating (224) present on a component (220), the method (300) being **characterised by** the following steps:
controlling, with a computing system (110), an operation of an electromagnetic radiation beam emitting device (10) such that a portion of a surface of the component is scanned with the electromagnetic radiation beam emitted by a scan head (32) of the electromagnetic radiation beam emitting device (10), the scan head (32) being coupled to an arm (16), the arm (16) being adjustable about at least three axes to move the scan head (32) relative to the surface of the component;
determining, with the computing system (110), a three-dimensional profile of the scanned portion of the surface;
generating, with the computing system (110), a slot pattern based on the determined three-dimensional profile; and
controlling, with the computing system (110), an operation of the arm (16) to adjust the position of the electromagnetic radiation beam relative to the surface of the component such that material is ablated from the coating to form the slot pattern in the thermal barrier coating (224).

12. The method (300) of claim 12, wherein controlling the operation of the arm (16) comprises initiating, with the computing system (110), movement of the arm (16) about the at least three axes to adjust the position of the electromagnetic radiation beam relative to the surface of the component such that the material is ablated from the thermal barrier coating (224) to form the slot pattern in the coating (224).

13. The method (300) of claim 12 or 13, wherein generating the slot pattern comprises morphing, with the computing system (110), a design model of the scanned portion of the surface based on the determined three-dimensional profile.

14. The method (300) of claim 14, wherein generating the slot pattern further comprises applying, with the computing system (110), the slot pattern to the morphed design model.

## Patentansprüche

1. Ein System (100) zum Formen von Schlitzen in einer Wärmedämmbeschichtung (224), die auf einer Komponente (220) vorhanden ist,
das System (100) umfassend:
eine elektromagnetische Vorrichtung zum Emittieren von Strahlungsbündeln (10), **gekennzeichnet dadurch, dass**:
die elektromagnetische Vorrichtung zum Emittieren von Strahlungsbündeln, einen Boden (14), einen mit dem Boden (14) gekoppelten Arm (16) und einen mit dem Arm (16) gekoppelten Abtastkopf (32) einschließt, wobei der Abtastkopf (32) so konfiguriert ist, dass er ein elektromagnetisches Strahlungsbündel auf eine Oberfläche der Komponente emittiert, wobei der Arm (16) um mindestens drei Achsen einstellbar ist, um den Abtastkopf (32) relativ zu der Oberfläche der Komponente zu bewegen; und
dass das System (100) ferner einschließt:
ein Computersystem (110), das so konfiguriert ist, dass es:
einen Betrieb der elektromagnetischen Vorrichtung zum Emittieren von Strahlungsbündeln (10) so steuert, dass ein Abschnitt der Oberfläche mit dem elektromagnetischen Strahlungsbündel abgetastet wird;
ein dreidimensionales Profil des abgetasteten Abschnitts der Oberfläche bestimmt;
ein Schlitzmuster auf der Grundlage des bestimmten dreidimensionalen Profils erzeugt; und
einen Betrieb des Arms (16) steuert, um eine Position des elektromagnetischen Strahlungsbündels relativ zu der Oberfläche der Komponente so einzustellen, dass Material von der Beschichtung abgetragen wird, um das Schlitzmuster in der Wärmedämmbeschichtung (224) zu bilden.

2. System (100) nach Anspruch 1, wobei das Computersystem (110) bei dem Steuern des Betriebs des Arms (16) so konfiguriert ist, dass es eine Bewegung des Arms (16) um die mindestens drei Achsen initiiert, um die Position des elektromagnetischen Strahlungsbündels relativ zu der Oberfläche der Komponente so einzustellen, dass das Material von der Beschichtung abgetragen wird, um das Schlitzmuster in der Beschichtung zu bilden.

3. System (100) nach Anspruch 1 oder 2, wobei das Computersystem (110) beim Erzeugen des Schlitzmusters so konfiguriert ist, dass es ein dem abgetasteten Abschnitt der Oberfläche zugeordnetes Konstruktionsmodell auf der Grundlage des bestimmten dreidimensionalen Profils morpht.

4. System (100) nach Anspruch 3, wobei das Computersystem (110) beim Erzeugen des Schlitzmusters so konfiguriert ist, dass es das Schlitzmuster auf das gemorphte Konstruktionsmodell anwendet.

5. System (100) nach einem der vorhergehenden Ansprüche, wobei der Abtastkopf (32) eine Vielzahl von Spiegeln (34, 36) und eine Linse (38) umfasst.

6. System (100) nach einem der vorhergehenden Ansprüche, wobei der Arm (16) ein erstes Armsegment (18, 20, 22) und ein zweites Armsegment (18, 20, 22) umfasst, das relativ zu dem ersten Armsegment (18, 20, 22) beweglich ist.

7. System (100) nach einem der vorhergehenden Ansprüche, wobei bei der Verwendung während der Erzeugung des Schlitzmusters die Komponente relativ zu dem Boden (14) während des Betriebs des Arms (16) stationär ist.

8. System (100) nach einem der vorhergehenden Ansprüche, wobei das Computersystem (110) ferner so konfiguriert ist, dass es:
den Betrieb der elektromagnetischen Vorrichtung zum Emittieren von Strahlungsbündeln (10) so steuert, dass der Abschnitt der Oberfläche mit dem elektromagnetischen Strahlungsbündel abgetastet wird, nachdem das Schlitzmuster in der Beschichtung gebildet wurde, um das Schlitzmuster zu überprüfen.

9. System (100) nach einem der vorhergehenden Ansprüche in Kombination mit einer Komponente (220), die eine Wärmedämmbeschichtung (224) aufweist, wobei die Oberfläche der Komponente gekrümmt ist.

10. System (100) nach einem der vorhergehenden Ansprüche in Kombination mit einer Komponente (220), die eine Wärmedämmbeschichtung (224) aufweist, wobei die Komponente eine Komponente eines Gasturbinentriebwerks ist.

11. Verfahren (300) zum Ausbilden von Schlitzen in einer Wärmedämmbeschichtung (224), die auf einer Komponente (220) vorhanden ist, wobei das Verfahren (300) durch die folgenden Schritte gekennzeichnet ist:
Steuern eines Betriebs einer elektromagnetischen Vorrichtung zum Emittieren von Strahlungsbündeln (10) mit einem Computersystem (110), so dass ein Abschnitt einer Oberfläche der Komponente mit dem von einem Abtastkopf (32) der elektromagnetischen Vorrichtung zum Emittieren von Strahlungsbündeln (10) emittierten elektromagnetischen Strahlungsbündel abgetastet wird, wobei der Abtastkopf (32) mit einem Arm (16) gekoppelt ist, wobei der Arm (16) um mindestens drei Achsen verstellbar ist, um den Abtastkopf (32) relativ zu der Oberfläche der Komponente zu bewegen;
Bestimmen mit dem Computersystem (110) eines dreidimensionalen Profils des abgetasteten Abschnitts der Oberfläche;
Erzeugen mit dem Computersystem (110) eines Schlitzmusters auf der Grundlage des bestimmten dreidimensionalen Profils; und
Steuern mit dem Computersystem (110) eines Betriebs des Arms (16), um eine Position des elektromagnetischen Strahlungsbündels relativ zu der Oberfläche der Komponente so einzustellen, dass Material von der Beschichtung abgetragen wird, um das Schlitzmuster in der Wärmedämmbeschichtung (224) zu bilden.

12. Verfahren (300) nach Anspruch 12, wobei das Steuern des Betriebs des Arms (16) das Auslösen der Bewegung des Arms (16) um die mindestens drei Achsen mit dem Computersystem (110) umfasst, um die Position des elektromagnetischen Strahlungsbündels relativ zu der Oberfläche der Komponente so einzustellen, dass das Material von der Wärmedämmbeschichtung (224) abgetragen wird, um das Schlitzmuster in der Beschichtung (224) zu bilden.

13. Verfahren (300) nach Anspruch 12 oder 13, wobei das Erzeugen des Schlitzmusters das Morphen eines Konstruktionsmodells des abgetasteten Abschnitts der Oberfläche auf der Grundlage des bestimmten dreidimensionalen Profils mit dem Computersystem (110) umfasst.

14. Verfahren (300) nach Anspruch 14, wobei das Erzeugen des Schlitzmusters ferner das Anwenden des Schlitzmusters auf das gemorphte Konstruktionsmodell mit dem Computersystem (110) umfasst.

## Revendications

1. Système (100) de formation de rainures dans un revêtement à barrière thermique (224) présent sur un composant (220), le système (100) comprenant :
un dispositif émetteur de faisceau de rayonnement électromagnétique (10), **caractérisé en ce que** :
le dispositif émetteur de faisceau de rayonnement électromagnétique comprend une base (14), un bras (16) couplé à la base (14) et une tête de balayage (32) couplée au bras (16), la tête de balayage (32) étant configurée pour émettre un faisceau de rayonnement électromagnétique vers une surface du composant, le bras (16) étant réglable autour au moins de trois axes pour déplacer la tête de balayage (32) par rapport à la surface du composant ; et
**en ce que** le système (100) comprend en outre :
un système informatique (110) configuré pour commander le fonctionnement du dispositif émetteur de faisceau de rayonnement électromagnétique (10) de sorte qu'une partie de la surface soit balayée par le faisceau de rayonnement électromagnétique ;
déterminer un profil tridimensionnel de la partie balayée de la surface ;
générer un modèle de rainure basé sur le profil tridimensionnel déterminé ; et
commander le fonctionnement du bras (16) pour ajuster une position du faisceau de rayonnement électromagnétique par rapport à la surface du composant de sorte à enlever par ablation le matériau du revêtement pour former le motif de rainure dans le revêtement à barrière thermique (224).

2. Système (100) selon la revendication 1, dans lequel, lors de la commande du fonctionnement du bras (16), le système informatique (110) est configuré pour initier le mouvement du bras (16) autour desdits au moins trois axes pour ajuster la position du faisceau de rayonnement électromagnétique par rapport à la surface du composant de sorte à enlever par ablation le matériau du revêtement pour former le motif de rainure dans le revêtement.

3. Système (100) selon la revendication 1 ou 2, dans lequel, lors de la génération du motif de rainure, le système informatique (110) est configuré pour transformer un modèle de conception associé à la partie balayée de la surface sur la base du profil tridimensionnel déterminé.

4. Système (100) selon la revendication 3, dans lequel, lors de la génération du modèle de rainure, le système informatique (110) est configuré pour appliquer le modèle de rainure au modèle de conception transformé.

5. Système (100) selon l'une quelconque des revendications précédentes, dans lequel la tête de balayage (32) comprend une pluralité de miroirs (34, 36) et une lentille (38).

6. Système (100) selon l'une quelconque des revendications précédentes, dans lequel le bras (16) comprend un premier segment de bras (18, 20, 22) et un second segment de bras (18, 20, 22) qui est mobile par rapport au premier segment de bras (18, 20, 22).

7. Système (100) selon l'une quelconque des revendications précédentes, dans lequel, lors de l'utilisation, lorsque le motif de rainure est généré, le composant est fixe par rapport à la base (14) pendant le fonctionnement du bras (16).

8. Système (100) selon l'une quelconque des revendications précédentes, dans lequel le système informatique (110) est en outre configuré pour :
contrôler le fonctionnement du dispositif émetteur de faisceau de rayonnement électromagnétique (10) de sorte que la partie de la surface soit balayée par le faisceau de rayonnement électromagnétique après la formation du motif de rainure dans le revêtement afin d'inspecter le motif de rainure.

9. Système (100) selon l'une quelconque des revendications précédentes en association avec un composant (220) possédant un revêtement à barrière thermique (224), dans lequel la surface du composant est incurvée.

10. Système (100) selon l'une quelconque des revendications précédentes en association avec un composant (220) possédant un revêtement à barrière thermique (224), dans lequel le composant est un composant de moteur à turbine à gaz.

11. Procédé (300) de formation de rainures dans un revêtement à barrière thermique (224) présent sur un composant (220),
le procédé (300) étant **caractérisé par** les étapes suivantes :
commander, à l'aide d'un système informatique (110), le fonctionnement d'un dispositif émetteur de faisceau de rayonnement électromagnétique (10) de sorte qu'une partie d'une surface du composant soit balayée par le faisceau de rayonnement électromagnétique émis par une tête de balayage (32) du dispositif émetteur de faisceau de rayonnement électromagnétique (10), la tête de balayage (32) étant couplée à un bras (16), le bras (16) étant réglable autour d'au moins trois axes pour déplacer la tête de balayage (32) par rapport à la surface du composant ;
déterminer, à l'aide du système informatique (110), un profil tridimensionnel de la partie balayée de la surface ;
générer, à l'aide du système informatique (110), un modèle de rainure basé sur le profil tridimensionnel déterminé ; et
commander, à l'aide du système informatique (110), le fonctionnement du bras (16) afin d'ajuster la position du faisceau de rayonnement électromagnétique par rapport à la surface du composant de sorte à enlever par ablation le matériau du revêtement pour former le motif de rainure dans le revêtement à barrière thermique (224).

12. Procédé (300) selon la revendication 12, dans lequel la commande du fonctionnement du bras (16) comprend l'initiation, à l'aide du système informatique (110), du mouvement du bras (16) autour desdits au moins trois axes pour ajuster la position du faisceau de rayonnement électromagnétique par rapport à la surface du composant de sorte à enlever par ablation le matériau du revêtement à barrière thermique (224) pour former le motif de rainure dans le revêtement (224).

13. Procédé (300) selon la revendication 12 ou 13, dans lequel la génération du motif de rainure comprend la transformation, à l'aide du système informatique (110), d'un modèle de conception de la partie balayée de la surface basé sur le profil tridimensionnel déterminé.

14. Procédé (300) selon la revendication 14, dans lequel la génération du motif de rainure comprend en outre l'application, à l'aide du système informatique (110), du modèle de rainure au modèle de conception transformé.
